# EUROPEAN PATENT SPECIFICATION

(11) **EP 2 017 062 B1**
(45) Date of publication and mention of the grant of the patent: **08.06.2011**
(21) Application number: 07014204.7
(22) Date of filing: 19.07.2007
(51) Int. Cl.: B29C 47/08

(54) **A screw housing for a double screw extruder, the double screw extruder and a method for manufacturing a screw housing**
Schraubengehäuse für einen Doppelschneckenextruder, der Doppelschneckenextruder und das Verfahren zur Herstellung eines Schraubengehäuses
Boîtier de vis pour une extrudeuse de double vis, l'extrudeuse et un procédé de fabrication d'un boîtier de vis

(43) Date of publication of application: 21.01.2009
(73) Proprietor: Schnabl, Erwin, 2120 Wolkersdorf im Weinviertel (AT)
(72) Inventor: Schnabl, Erwin, 2120 Wolkersdorf im Weinviertel (AT); Lammer, Andreas, 8606 Kapfenberg (AT)
(74) Representative: Dilg, Haeusler, Schindelmann Patentanwaltsgesellschaft mbH

(56) References cited:
- DE-A1- 2 358 362
- JP-A- 1 022 527
- US-A- 3 010 151
- US-A- 3 900 188
- US-A- 3 981 428
- US-A- 4 440 511

## Description

The invention relates to a screw housing for a double screw extruder.

The invention further relates to a double screw extruder.

Moreover, the invention relates to a method of manufacturing a screw housing for a double screw extruder.

Extrusion is a manufacturing process used to create long objects of a fixed cross-sectional profile. A material, often in the form of a billet, is pushed and/or drawn through a die of the desired profile shape. Hollow sections are usually extruded by placing a pin or piercing mandrel inside of the die, and in some cases positive pressure is applied to the internal cavities through the pin. Extrusion may be continuous (producing essentially indefinitely long material) or semi-continuous (producing many short pieces).

DE 2327684 discloses that a bimetal multiple cylinder for extruders in plastics processing machinery is formed of a plurality of cut-away bimetal tubes having each a base material supporting an internal lining. The bimetal tubes are each cut-away by a pair of longitudinal cuts extending from the tube exterior to the tube interior to expose a pair of cut faces, and the cut faces are each arranged to face a respective cut face of an adjacent cut-away bimetal tube. Adjacent cut-away bimetal tubes are joined to one another by welding at their facing cut faces.

US 3,900,188 discloses a screw extruder comprising in combination an elongate housing including a lengthwise extending space, a sleeve made of a wear-resistant material inserted into said space, the inner peripheral outline of the housing being larger than the outer peripheral outline of the sleeve thereby defining within the housing a space intermediate the inside of the housing and the outside of the sleeve, and a hardened filler material filling said intermediate space, said filler having a melting point lower than the materials of which the housing and the sleeve are made.

DE 43 21 888 A1 discloses a worm conveyor for continuously feeding and extruding bulk moulding materials. In order to reduce production costs and to minimize maintaining costs, a screw casing of the worm conveyor is composed of several adjacent segments that are connected by outlying linking elements, which hold the adjacent segments together. The linking elements may be connected to a ground plate of the worm conveyor.

However, conventional extruder systems may be expensive in manufacture.

It is an object of the invention to provide an extruder system which may be manufactured in a simple and cheap manner.

In order to achieve the object defined above, a screw housing for a double screw extruder, a double screw extruder, and a method of manufacturing a double screw extruder according to the independent claims are provided.

An exemplary embodiment of the invention comprises two flanges for a screw housing of a double screw extruder, each flange comprising a flange body, and a flange bore formed in the flange body and having a shape of two partially overlapping circles, wherein the flange bore has an inner perimeter corresponding to (for instance being essentially equal to or only slightly larger than) an outer perimeter of an accommodation chamber for two extruder screws (which may be slid into the flange bore for a tight fit connection).

According to an exemplary embodiment of the invention, a screw housing (or casing) for (accommodating two extruder screws of) a double screw extruder is provided, the screw housing comprising an accommodation chamber (which may also serve as a processing chamber in which two extruder screws act on molten plastics material for preparing an extrusion procedure) for two extruder screws which has a first end portion and a second end portion, a first flange having the above mentioned features and a second flange having the above mentioned features, wherein the flange bore of the first flange has an inner perimeter corresponding to an outer perimeter of the first end portion of the accommodation chamber, and wherein the flange bore of the second flange has an inner perimeter corresponding to an outer perimeter of the second end portion of the accommodation chamber.

According to still another exemplary embodiment of the invention, a double screw extruder is provided, the double screw extruder comprising a screw housing having the above mentioned features, two extruder screws accommodated in the accommodation chamber of the screw housing, a drive unit mounted on the first flange and adapted for driving the two extruder screws, and a shaping tool (defining a cross-sectional shape of members manufactured by extruding using the double screw extruder) mounted on the second flange and adapted for shaping molten material to be extruded.

According to yet another exemplary embodiment of the invention, a method of manufacturing a screw housing for a double screw extruder is provided, the method comprising forming an accommodation chamber for two extruder screws which has a first end portion and a second end portion, forming a first flange having the above mentioned features and a second flange having the above mentioned features, connecting the flange bore of the first flange, having an inner perimeter corresponding to an outer perimeter of the first end portion of the accommodation chamber, to the first end portion of the accommodation chamber, and connecting the flange bore of the second flange, having an inner perimeter corresponding to an outer perimeter of the second end portion of the accommodation chamber, to the second end portion of the accommodation chamber.

According to an exemplary embodiment of the invention, a flange for a double screw extruder is provided having a bore of two overlapping circles which are configured, sized and dimensioned to receive a correspondingly shaped and dimensioned double screw accommodation chamber (for instance by force closure or closed linkage, optionally supported by a welding or screwing connection) which may be formed with an exterior cross-sectional shape of an "8". By directly inserting and fixing the accommodation chamber in the correspondingly shaped recesses of the flange body, it is possible to simplify the manufacture procedure, since no additional measures are necessary to form a structure of two connected pipes with connected flange or adapter portions. Thus, it may be possible to directly screw or fit the overlapping hollow double cylinder into the flanges so that such an arrangement may be obtained which may be directly connected to further components of a double screw extruder.

Next, further exemplary embodiments of the flange will be explained. However, these embodiments also apply to the screw housing, to the double screw extruder and to the method.

The flange body may comprise one or more fastening bores for fastening a tool at the flange, for instance by screwing. For example, the flange body may have an adapter or interface portion which may be a basically planar circular surface having bores around a center of the circle. Via such bores which may or may not have an inner thread, screws or other fastening elements may be used to connect the flange body to a coupled component, for example to mount a gear and shaft assembly for driving two extruder screws received in the accommodation chamber. On the other flange of a double screw extruder, the flange bores may serve as an adapter to fasten a shaping tool for defining a shape of a solidifying molten mass of plastics material such as PVC. Thus, the arrangement of two flange bodies and an overlapping hollow structure may provide for an integrally formed component which only has to be connected to a drive unit and to a shaping tool in order to perform an extrusion procedure.

The flange may be formed based on a solid body having a circular cylindrical shape or an elliptical cylindrical shape. A circular cylindrical shape may allow for a simple and therefore cheap production. An elliptical cylindrical shape may be a very efficient geometrical shape for integrating two overlapping circles in the flange body which allows to produce the flange with low weight and a proper stability. The solid body having a circular cylindrical shape or an elliptical cylindrical shape may be connected to an end plate serving as an adapter portion.

The flange body may comprise two cut pipes which are cut at a secant-shaped cutting plane and connected to one another. Furthermore, a connection plate may be connected to or integrally formed with the two cut pipes. In other words, two pipes, that is hollow cylindrical metallic structures having a sufficiently thick wall may be processed so that a portion of the annular circular segment is removed. At the cutting edges, the two cut pipes may be fixed to one another, for instance by welding or soldering or screwing. A connection plate connected to the two connected pipes may then be fixed to the two cut and connected pipes which provides a flange connectable to an accommodation chamber formed by two overlapping and connected cut hollow cylinders.

The flange body may comprise a filler hole adapted for filling material to be extruded through the filler hole into the accommodation chamber. Thus, the further function of an interface for material to be processed by the double screw extruder may be realized by the flange, thereby allowing for a compact construction of the double screw extruder. The filler hole(s) may be formed in a lateral wall of a cylindrical portion of the flange body and may be aligned along an extension which is basically perpendicular to an extension of extruder screws in the accommodation chamber.

In the following, further exemplary embodiments of the screw housing will be explained. However, these embodiments also apply to the flange, to the double screw extruder, and to the method.

The accommodation chamber may comprise a double screw bore having a shape of two partially overlapping circles (similar to an "8"), wherein the double screw bore has an inner perimeter which is smaller than the outer perimeter of the accommodation chamber. Therefore, the accommodation chamber may have an outer surface which has the shape of the outer edge of the number "8" and has an inner surface which allows to receive two extrusion screws.

An inner surface of the accommodation chamber delimiting the double screw bore may comprise a hardened material (having a hardness being larger than a hardness of remaining material of the double-tube accommodation chamber). By providing an inner surface of the accommodation chamber - which is subject to the processing of the molten plastics material and therefore prone to wear - with a hardened surface material, the lifetime of the double screw extruder may be significantly increased by making the inner surface more robust.

A thermally conductive coating structure may surround an outer surface of the accommodation chamber. Such a thermally conductive coating structure which may be formed or manufactured around the accommodation chamber by casting or screwing may, for instance, be made of a ceramics material, may ensure a proper thermal coupling between the accommodation chamber and heating and/or cooling elements provided in and/or on and/or around the conductive coating structure.

The thermally conductive coating structure may have a value of the thermal conductivity k of at least 100 W/(m K), particularly of at least 200 W/(m K).

Particularly, the thermally conductive coating structure may comprise a ceramic, aluminium, aluminium nitride, or cement bound aluminium. Particularly, aluminium comprising thermally conductive coating structures may allow to significantly improve the thermal coupling properties and therefore they allow to refine the extrusion procedure by properly defining the processing parameters. Simultaneously, such materials may contribute to the mechanical stability of the apparatus.

The thermally conductive coating structure may have an external shape of a cylinder or an ellipse. However, other geometries of the thermally conductive coating structures are possible, for instance a rectangular or polygonal cross-section.

A heating band or any other heating element may be arranged at (for instance wrapped around) the thermally conductive coating structure. The wrapping may be performed between the accommodation chamber and an inner surface of the thermally conductive coating structure. Alternatively, the wrapping may be performed around an outer surface of the thermally conductive coating structure. A heating band may function as an ohmic heating element for locally or globally increasing the temperature within the accommodation chamber during the extrusion procedure.

A cooling band or any other cooling element may be arranged at (for instance wrapped around) the thermally conductive coating structure. The cooling band may be wrapped at a position between an external surface of the accommodation chamber and an inner surface of the thermally conductive coating structure. Alternatively, the cooling band may be wrapped around an exterior surface of the thermally conductive coating structure. The cooling may be performed via one or more ventilators circulating cold fluids such as cold air in thermal contact with the cooling band which may be made of a copper material. According to another exemplary embodiment, the cooling band may be realized as a Peltier cooling element.

Heating band and/or cooling band may be arranged in such a manner that a local temperature adjustment of molten plastics in an interior of the accommodation chamber may be controlled accurately during the extrusion procedure. This may allow to separately adjust or regulate the temperature at individual sections within the accommodation chamber, thereby allowing for a refined and accurate extrusion procedure.

A reinforcement sheath (for instance made of a metallic material) may be provided at an outer circumference of a section between the first end portion and the second end portion of the accommodation chamber. Particularly, such a reinforcement sheath (for example a metal skin) may be positioned around the thermally conductive coating structure. Such a reinforcement sheath may protect the double screw extruder from external influences such as mechanical loads, humidity or dirt.

The accommodation chamber may be directly tight fit into the first and the second flange without a separate adapter between the accommodation chamber and the first and the second flange. In other words, the screw housing may consist of the accommodation chamber and two connected or connectable flanges, without further elements for connecting accommodation chamber and flanges. By such a direct connection, the provision of separate adapter components may become dispensable which may reduce the costs for manufacturing the double screw extruder, may reduce the weight and may make the thermal adjustment of the properties within the double screw extruder more accurate by reducing the heat impact required for heating the arrangement to a desired temperature.

The two partially overlapping circles may have a constant radius and diameter and overlapping area along an axial extension of the accommodation chamber. In other words, the cross-sectional area in an interior of the accommodation chamber may be essentially equal along the extension of the accommodation chamber.

Alternatively, the two partially overlapping circles may have a conically tapering diameter along an extension of the accommodation chamber. Such a conical configuration may have the property that the diameter or area in the accommodation chamber increases (for instance linearly) along an extension of the accommodation chamber.

The double screw extruder may be constructed to be appropriate for a double screw extruding application for processing polyvinyl chloride (PVC). For this purpose, it may be possible to flange-mount a drive at a first flange for driving the extrusion screws and for providing raw material for the extrusion procedure of PVC. At another end portion of the accommodation chamber of the double screw extruder, a shaping tool may be attachable which may shape the molten solidifying material leaving the accommodation chamber to produce a solidified (for example endless) plastics member.

Next, further exemplary embodiments of the method of manufacturing a double screw extruder will be provided. However, these embodiments also apply to the flange, to the screw housing, and to the double screw extruder.

The accommodation chamber may be formed by cutting two tubular pipes with a secant-shaped cutting plane and by connecting the pipes at the cutting edged to one another. Thus, a planar cutting plane (which may be realized with a cutting water beam or with milling technologies) may be provided for processing the tubular pipes to produce structures which, in a cross-sectional view, have a shape of a section of an annular circular structure. The cut tubes may have two open end portions which, when being contacted to one another, are directly adjacent to thereby allow for a connection along a common connection seam (such as a welding seam). In other words, the cutting procedure may remove an annular segment of the cylindrical pipes which removed portion may be essentially equal for the two pipes.

The two cut pipes may be connected to one another by electron beam welding. The inventors have recognized that electron beam welding is a very efficient connection procedure which allows a stable and robust connection of the two cut pipes.

Hardening an inner surface of the accommodation chamber or of a tube may include introduction of hardening material into the two tubular pipes at a temperature below a melting temperature of a material of the two tubular pipes and above a melting temperature of the hardening material. After having inserted such a molten or powdered hardening material in the accommodation chamber or in the tube, it may be closed (for instance by putting cover elements on the accommodation chamber or the tube). The accommodation chamber or the tube may then be rotated so as to guarantee a proper and homogeneous distribution of the hardening material over the inner surface of the accommodation chamber or the tube. This may ensure a hardened inner surface and increases the service life.

The flange bores may be connected to the end portions of the accommodation chamber by sliding the flange bores over the end portions and by fixing the flange bores at the end portions, for instance by welding. However, alternatively to welding, other connection procedures may be employed such as clamping or screwing or soldering.

The method may comprise forming an auxiliary skin around and spaced with regard to an outer surface of the accommodation chamber, casting a thermally conductive coating structure in the space between the auxiliary skin and the accommodation chamber, and subsequently removing the auxiliary skin. Thus, the thermally conductive coating structure may be manufactured by casting, which may allow to provide for a proper contact between an outer surface of the accommodation chamber and an inner surface of the conductive coating structure.

Alternatively, the thermally conductive coating structure may be screwed or mechanically fastened in another manner onto the accommodation chamber. In such a scenario, an inner surface of the previously manufactured thermally conductive coating structure may be provided with a design which is in accordance with an outer surface of the accommodation chamber. Then, the thermally conductive coating structure may be mechanically connected to the accommodation chamber.

According to an exemplary embodiment of the invention, a structure similar to a cylinder may be provided for a double screw extruder and may be manufactured by assembling two thick walls of tubes or pipes.

Double screw extruders may be denoted as machines for the extrusion of plastics or for the conditioning of plastics on the basis of usually powdery educts. In such a scenario, two screws may be rotated in an interior of an accommodation chamber in which two overlapping bores have been formed. In flanges connected to the accommodation chamber, bores may then be formed for instance using deep drilling. The accommodation chamber may be connected on one end with a flange in order to flange-mount a drive which drives the extruder screws. The accommodation chamber may be connected on the other end with a flange in order to fix an adapter which supplies the molten plastics to a shaping tool. The flanges may have a larger diameter than the accommodation chamber, so that the flanges may be formed separately and may be screwed using a thread or may be connected by welding to the accommodation chamber.

Thus, an extrusion casing may comprise two flanges and a base body having axially overlapping bores. For the functioning of the cylinder in an actual operation of the double screw extruder, the provision of heating bands and/or a cooling fan for tempering may be advantageous, in order to allow for a proper adjustment of the extrusion procedure. It is also possible to temper oil and to enable a precise regulation in dedicated zones.

The accommodation chamber may be adapted to be abrasion-protected, so that an abrasion-projected layer may be manufactured using a centrifugal casting procedure. For this purpose, a thick walled tube may be filled with a specific amount of alloy powder having a melting point below the melting point of the tube material. The tube may be closed at sides thereof in a non gas tight manner. Then, the tube may be warmed and may be brought to a temperature below tube melting point of the tube but above the melting point of the alloy powder and may be brought into rotation. By resulting centrifugal forces, an inner tube is formed along an interior surface of the original tube, the inner tube having a wall thickness of wear-protected material depending on the amount of the introduced powder (hardening material). A housing manufactured in such a manner may then serve as a basis for receiving extrusion screws.

In order to manufacture a housing for a double screw cylinder, two of the centrifugal cast tubes may be opened circumferentially and may be subsequently connected to one another at correspondingly formed edges, for instance using electron beam welding. By taking this measure, a structure may be obtained which has a similar shape as the frame of glasses, or may have the shape of a lying "8". For manufacturing an accommodation chamber ready for extrusion, such a frame of glasses may be assembled by connecting flanges. The flanges may be provided with bores in which the lying "8" may fit. The housing may have a mechanical stability which is required for the extrusion procedure.

Therefore, according to an exemplary embodiment of the invention, an extruder casing may be provided on the basis of two connected tubes which already provide the ready housing without a further adjustment into a carrier housing. In order to make it possible to obtain such an arrangement, it may be further advantageous that the flanges are subsequently welded in such a construction. Optionally, such a flange may fulfil more functions than conventional flanges. In such an embodiment, the flanges do not only have to receive actual traction forces or dragging forces (which may be generated by the screw back pressure force due to a mass pressure in the cylinder), but may additionally receive radial forces which, in a conventional construction, a solid cylinder receives. Such a solid cylinder, particularly an outer portion thereof, may be dispensable according to exemplary embodiments of the invention.

Therefore, according to an exemplary embodiment of the invention, an extrusion chamber for a double screw extruder may be provided comprising connected tubes having a secant-shaped cut. In an embodiment, such an extrusion chamber is not fitted in a further housing, but may be connected to a specific flange construction attached to ends thereof. The chamber can be adapted to be wear-free or wear-protected and may be manufactured in a parallel type or in a conical type.

Thus, an extrusion cylinder (which may have a shape deviating from an exact geometrical cylinder) being part of a double screw extruder may be provided which may be used for PVC processing. Embodiments of the invention provide a special manufacturing method for extrusion cylinders, particularly for PVC applications, for high security in terms of even and constant inner surface of (conical) bores. A constant contact between screw running flights and a barrel surface may be obtained. According to an exemplary embodiment, a wear protection particularly in a metering section may be provided. A proper hardness may be ensured by a special two step gas nitrided process. Such a machine may be operated in an air or oil cooled manner. A single piece barrel may be provided.

According to one embodiment, the accommodation chamber may be directly connected to an end surface of the flange. In one embodiment, the flange may have an opening which is adjusted to directly insert the accommodation chamber into the bore of the flange so that the accommodation chamber is received in an interior of the flanges. Powder as a working material for the plastic extrusion may be supplied via a filler opening in the flange.

Embodiments of the invention are suitable also for (short) compounder housings. The tubes may be adapted in a nitrided and parallel manner. The tubes may be formed conically or in a parallel manner. The shape of the device may be elliptically, general not only in the last zone. Particularly the last zone may have a cast helix for fluid cooling. A compounder housing may be manufactured by welding with two or more tubes with an aluminium housing and cooling bores being fixedly cast.

It is possible that the tubes are hardened. The tubes may also be provided with a centrifugal cast protection layer. A hardening layer may be cast for compound housings as well.

A thermally conductive structure of aluminium may be screwed or cast. Aluminium may be screwed or may be cast directly into a hollow space delimited by an outer metal skin mould. Aluminium powder may be cast with a cement binder in a metal sheet mould which may later form the outer contour, and this may also be performed with aluminium nitride.

A hard layer may be cast for a compounder housing. As a carrier layer, steel may be used. The hardened layer may be cast for compounder housing carrier layers. Aluminium may be processed with cast cooling coils and welded steel flanges. A compounder housing may be manufactured by welding two tubes with an aluminium housing with cool bores in a fixed cast embodiment.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Fig. 1 to Fig. 10 illustrate structures obtained during a method of manufacturing a double screw extruder according to an exemplary embodiment of the invention.
Fig. 11 illustrates a basic shape of a tube pair with a welding seam in a cross-sectional view according to an exemplary embodiment of the invention.
Fig. 12 illustrates a basic shape of a tube pair having a welding seam and having a hardening structure formed by centrifugal casting according to an exemplary embodiment of the invention.
Fig. 13 illustrates a first view of a flange having a section with an oval cross-section according to an exemplary embodiment of the invention.
Fig. 14 shows a second view of the flange of Fig. 13.
Fig. 15 illustrates a screw housing of a double screw extruder according to an exemplary embodiment of the invention.
Fig. 16 illustrates a screw housing of a double screw extruder according to another exemplary embodiment of the invention showing a fill-in opening and welding seams.
Fig. 17 shows an exploded view of a double screw extruder according to an exemplary embodiment of the invention.

The illustration in the drawing is schematically. In different drawings, similar or identical elements are provided with the same reference signs.

In double screw extrusion processes, a degassing section with degassing bores may be advantageous. To keep the drawings simple these bores are not shown.

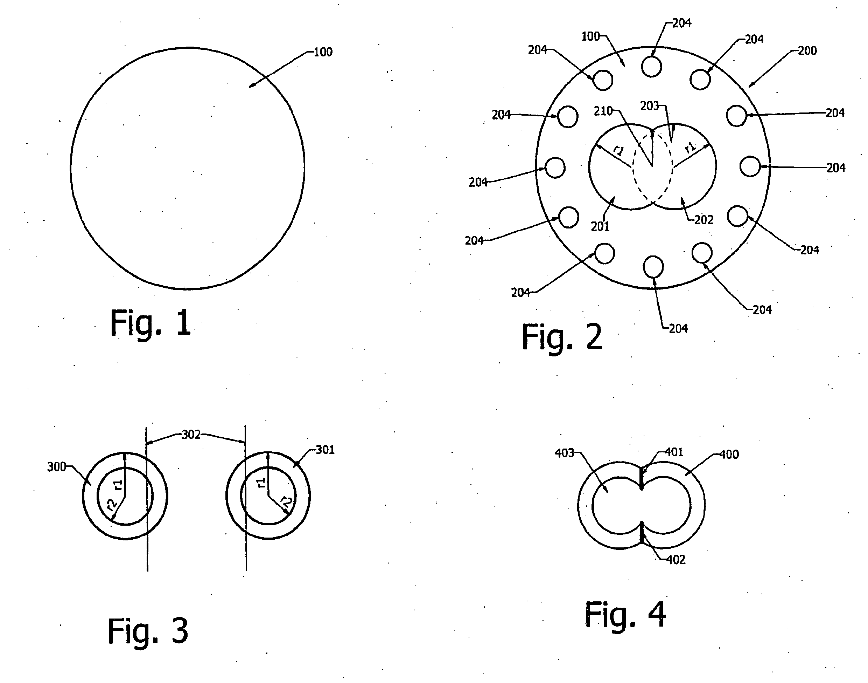

In the following, referring to Fig. 1 and Fig. 2, a method of manufacturing a flange for a double screw extruder according to an exemplary embodiment of the invention will be explained.

**Fig. 1** shows a full cylinder 100 of a steel material. Alternatively, an arrangement of two full cylinders being arranged concentrically and having different radii may be used as a starting point.

In order to obtain the flange 200 shown in **Fig. 2****,** the full cylinder 100 which may also be denoted as a flange body is made subject of a drilling procedure to thereby generate a first cylindrical bore 201 having a radius r1 and a second cylindrical bore 202 also having the radius r1. As can be taken schematically from Fig. 2, the two bores 201, 202 overlap in a central portion or overlapping portion 210 of the flange body 100 to thereby form a reception hole for receiving an accommodation chamber, as will be described below in more detail.

The flange 200 is adapted as a component for a double screw extruder and comprises the flange body 100 and the flange bore 201, 202 having the shape of two partially overlapping circles. The flange bore 201, 202 has an inner contour or perimeter 203 which corresponds to an outer perimeter of an accommodation chamber for two extruder screws/a double screw (see Fig. 4). Milling or turning procedures may be used for manufacturing the flange 200 having an interior bore 201, 202 shaped similarly as a frame of glasses. Furthermore, fastening bores 204 are provided along an outer circumference of the perforated cylindrical flange body 100. Via such flange bores 204, the flange 200 may be connected to a shaping tool or to a drive unit of a double screw extruder. The bores 204 may be formed with or without an inner thread, to allow fastening by screws.

In the following, referring to Fig. 3 and Fig. 4, it will be described in more detail how an accommodation chamber is formed which may be mounted in cooperation with the flange 200.

**Fig. 3** shows two hollow cylindrical tubes 300, 301 having an inner radius r2 and an outer radius r1 or slightly smaller than r1. Thus, the hollow cylindrical tubes 300, 301 have an annular cross-section and a cylindrical wall.

As indicated schematically in Fig. 3, the hollow cylinders 300, 301 are made subject of a cutting procedure and are cut along a cutting plane which is formed perpendicular to the paper plane of Fig. 3 , wherein a cross section of the cutting plane with the paper plane is indicated by dashed cutting lines 302. By taking this measure, secant portions of the hollow cylinders 300, 301 are removed to thereby open a lateral wall of the hollow cylindrical structures 300, 301. Consequently, in a cross-sectional view, the cut hollow cylinders 300, 301 are generally "C"-shaped.

As can be taken from **Fig. 4****,** the cut hollow cylinders 300, 301 are connected along their cutting edges by electron beam welding to thereby obtain an accommodation chamber 400 having welding seams 401, 402 at the cut portions.

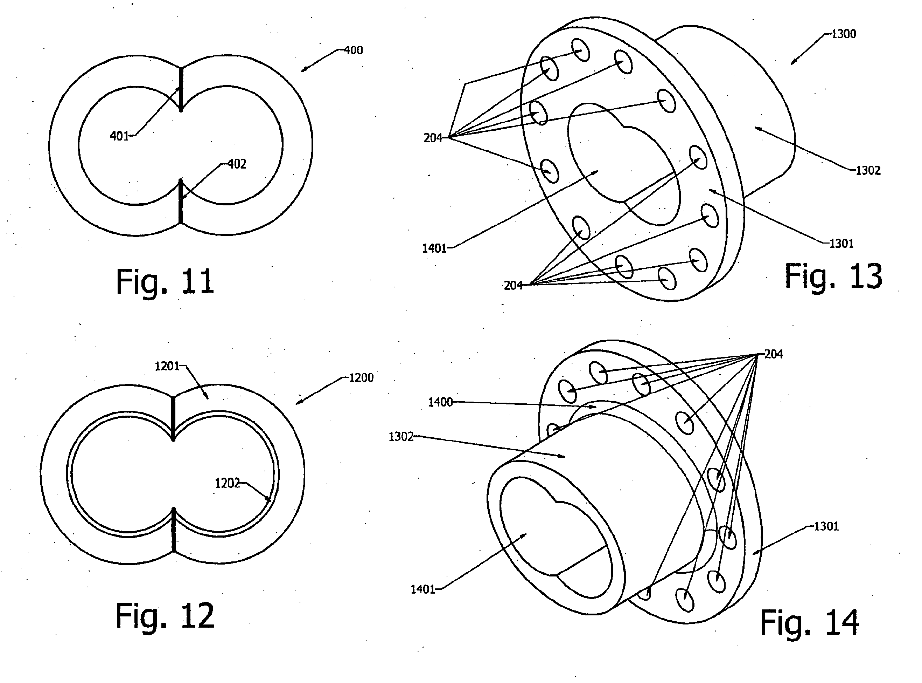

The connection of the two halves by electron beam welding may be performed with a welding speed of 10 cm/min to 15 cm/min. The heat introduction by such a procedure is very small. It is also possible with such a procedure to melt the material of the tubes 300, 301 in deep layers and in a very defined manner. It is therefore also possible to include a wear protection layer (which is not used in the embodiment of Fig. 1 to Fig. 10, but which is shown for instance in Fig. 12) in the welding procedure. Vacuum may be used as a protection medium during the welding. As alternatives to electron beam welding, laser welding or sub-merged welding may be implemented.

For example, r2 may be 6,5 cm. An extension of the accommodation chamber 400 in a direction perpendicularly to the paper plane may be 4 m. During an extrusion procedure for PVC processing, two extruder screws may extend along an inner hole 403 in the accommodation chamber 400.

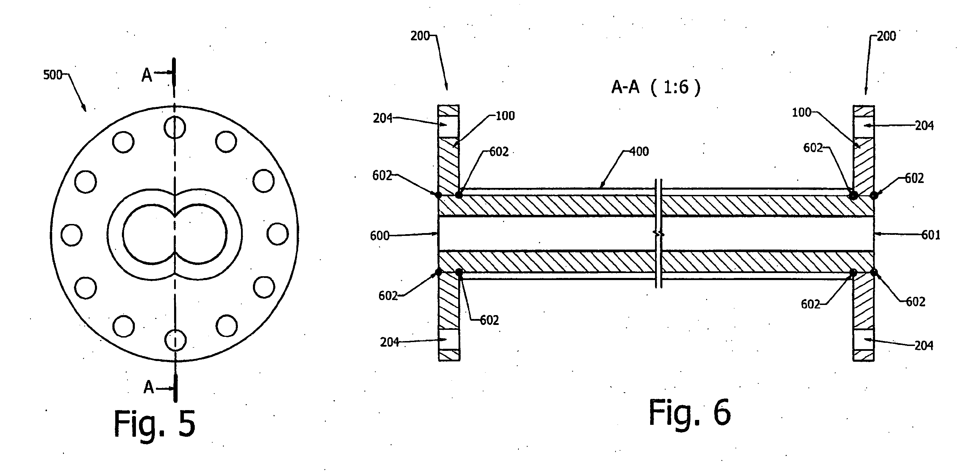

In the following, referring to Fig. 5 to Fig. 10, it will be described in more detail how an accommodation chamber 400 is mounted on flanges 200 to manufacture an extruder screw housing for a double screw extruder.

**Fig. 5** shows how an extruder screw housing 500 according to an exemplary embodiment is obtained by mounting two flanges 200 as shown in Fig. 2 on an accommodation chamber 400 as shown in Fig. 4.

In order to obtain the extruder screw housing 500 (for a double screw extruder) shown in a first view in Fig. 5 and in a second view in Fig. 6, the following procedure may be performed. End portions of the accommodation chamber 400 are inserted into or slid into recesses 201, 202 of the flange 200, wherein the equivalence between the radius r1 of the bores 201, 202 and of the outer radius of the tubes 300, 301 results in a proper fit of the accommodation chamber 400 in the recesses 201, 202. After having inserted the correspondingly shaped components 400, 200 into one another, they may be connected by welding, as indicated by welding spots 602. The welding procedure may be performed at specific welding spots, along welding lines, or along the entire contact area of the accommodation chamber 400 and the recesses 201, 202. The flanges 200 are connected to the accommodation chamber 400 using welding and/or turning procedures.

The apparatus shown in Fig. 6 is configured to stand an inner procedural pressure of 600 bar, particularly present in the first half metre of the 4 m long accommodation chamber 400, in processing direction. As can be taken from Fig. 5 and Fig. 6, the structure having a cross-sectional shape similar to a frame of glasses shown as the accommodation chamber 400 is then inserted into the flanges 200 at both ends.

It may be a characteristic of the embodiment of Fig. 1 to Fig. 10 that the flange 200 has an inner contour to fit or match an outer contour of the frame of the glasses structure of the accommodation chamber 400. Thus, any further adapters between the components 200 and 400 may be dispensable.

The device of Fig. 6 may be used as or for a screw casing for a double screw extruder. The accommodation chamber 400 for a double screw has a first end portion 600 and a second end portion 601. The flange bore 201, 202 of a first flange 200 (shown on the left-hand side in Fig. 6) has an inner perimeter essentially corresponding to an outer perimeter of the first end portion 600 of the accommodation chamber. The flange bore 201, 202 of the second flange 200 (shown on the right-hand side in Fig. 6) has an outer perimeter corresponding to an inner perimeter of the second end portion 601 of the accommodation chamber 400.

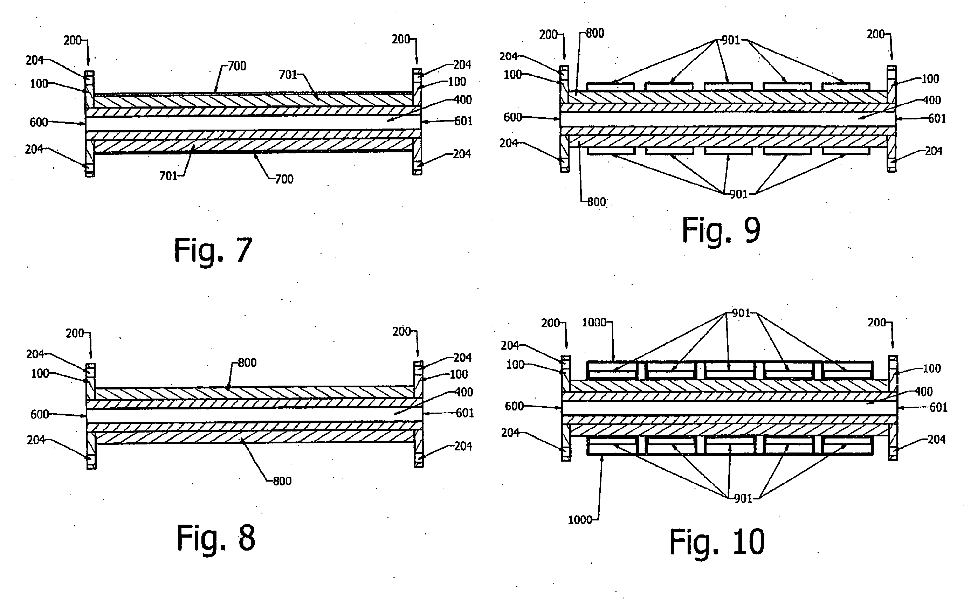

As can be taken from **Fig. 7****,** an auxiliary metal skin 700 is attached along an outer circumference of the exposed portion of the accommodation chamber 400 to thereby form a hollow space 701. A hole (not shown in Fig. 7) may be formed in the auxiliary metal skin 700.

As can be taken from **Fig. 8****,** castable material (for instance of aluminium nitride) may be inserted through such a hole into the hollow space 701 delimited by the auxiliary metal skin 700 and the accommodation chamber 400. This castable material may then be solidified to form a cast thermally conductive coating structure 800 in direct contact with an outer surface of the accommodation chamber 400 to provide for a proper thermal coupling between the accommodation chamber 400 and heating elements/cooling elements subsequently formed surrounding the accommodation chamber 400. After having solidified the thermally conductive coating structure or cover 800, the auxiliary metal sheet 700 may be removed. A resulting state is shown in Fig. 8. The elliptical or cylindrical metal skin 700 may be buckled over the flanges 200 and may define the inner hollow space 701 which may then be filled with a ceramics or the like by casting. Subsequently, the metal skin 700 may be detached.

It is possible to implement one or more (for instance five) thermo element bores in the accommodation chamber 400 or in an inner portion of the thermally conductive coating structure 800. Such a thermo element may allow for a temperature measurement within a blind hole. This may allow to accurately measure the temperature in the accommodation chamber 400 in a spatially resolving manner during a plastic manufacture process.

As can be taken from **Fig. 9****,** a heating band 901 may be wrapped around an outer circumference of the coating 800 in order to allow for a heating of a cavity 403 of the accommodation chamber 400.

Furthermore, as can be taken from **Fig. 10****,** a cooling band 1000 may be wrapped around an outer circumference of the structure shown in Fig. 9. Such a copper band 1000 may be used for cooling and may be operated in cooperation with one or more ventilators (not shown). A turbulent air stream may be brought in a thermal contact with the copper band 1000 (for instance having a thickness of 0.5 mm) so as to cool the copper band 1000 and therefore an interior space 403 of the accommodation chamber 400, if desired.

Although not shown in Fig. 1 to Fig. 10, it is also possible to provide a further protection sheath around an outer circumference of the components of Fig. 10 in order to support receiving forces occurring during an extrusion procedure. Thus, materials and dimensions of the double screw extruder shown in Fig. 10 may be chosen in accordance with the loads acting on the structure during operation.

**Fig. 11** shows a cross-sectional view of an accommodation chamber 400 formed in a similar manner as shown in Fig. 4, and shows in more detail the welding seams 401, 402.

**Fig. 12** shows an accommodation chamber 1200 according to another exemplary embodiment of the invention. Again, two annularly cut hollow cylinders are connected providing the shape 1201 similar as a number "8". However, in the embodiment of Fig. 12, a hardening layer 1202 is additionally provided along an internal cavity of the accommodation chamber 1200.

In order to manufacture such a hardening structure 1202, tubes as the ones denoted with reference numerals 300 and 301 in Fig. 3 are filled with a powder (for instance tungsten carbide in a nickel basic matrix) and are closed at both end portions with a cover. This may ensure that the powder remains within an internal cavity of the cylindrical structures 300, 301. The hollow cylinders 300, 301 may then be rotated along a central axis to equally distribute the material of the powder. This may be done at a temperature which is higher than the melting temperature of the tungsten carbide alloy, but lower than the melting temperature of the cylinders 300, 301. By taking this measure, hardening layers 1202 of a continuous thickness are formed within the cylinders 300, 301. After a cutting and welding procedure illustrated in Fig. 3 and Fig. 4, the structure 1200 shown in Fig. 12 is obtained.

**Fig. 13** and **Fig. 14** show a flange 1300 according to an exemplary embodiment of the invention.

The flange 1300 comprises a connection plate 1301 having a plurality of circumferentially arranged bore holes 204 for connection to further components. This plate 1301 is connected by welding at a welding portion 1400 to an elliptical flange body 1302 or the hole flange 1300 is machined of a single piece without welding. A bore 1401 shaped as two overlapping circles is formed in both the connection plate 1301 and the elliptical flange body 1302.

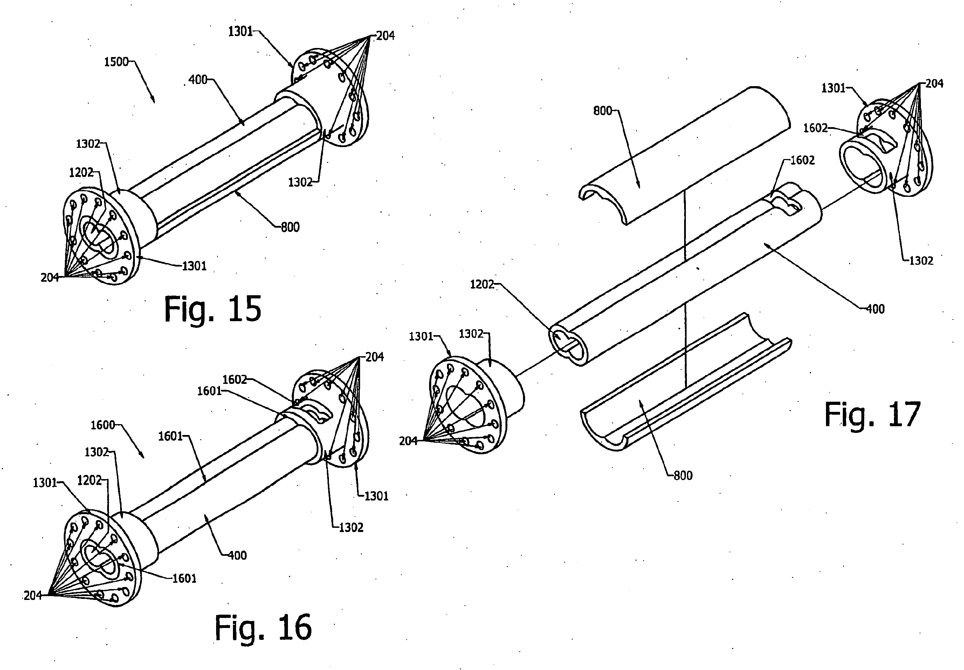

**Fig. 15** shows a screw housing 1500 of a double screw extruder according to an exemplary embodiment of the invention.

**Fig. 16** shows a screw housing 1600 of a double screw extruder and explicitly shows welding seams 1601. Moreover, a fill-in section 1602 is shown via which material can be filled in the double screw extruder 1600 for being extruded. The fill-in opening 1602 is formed in the flange body 1302.

**Fig. 17** shows a partially exploded view of the screw housing 1500 of Fig. 15 with material feed section 1602 shown in Fig. 16.

Embodiments of the invention enable the manufacture of extrusion casings in an economic manner so that the stand times of extrusion casings may be increased and that the corrosive wear may be reduced. Thus, a low cost solution for manufacturing such double screw extruders may be provided which may be used with conical and parallel cylinders.

Thus, parallel cylinders, conical cylinders and compound cylinders may be manufactured according to exemplary embodiments of the invention. Compounds may be double screw machines which are turned in a parallel feeding manner to enable a specific mix effect or the introduction of pigments or fill material. Such a machine may be assembled from a plurality of short sections connected via flange connections.

Aluminium may be an advantageous material for a thermal coupling member due to heat conduction requirements. This material can be screwed on or may be cast on. It is also possible to provide such a coating/cover using aluminium nitride or a low cement bound aluminium or magnesium powder as a cast mass. The use of aluminium having a very high heat conduction coefficient may significantly increase the radial heat conduction so that a high throughput at proper thermal conduction may be obtained.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A screw housing (500) for a double screw extruder, the screw housing (500) comprising
an accommodation chamber (400) for two extruder screws which has a first end portion (600) and a second end portion (601);
a first flange (200) and a second flange (200), each of the first flange (200) and the second flange (200) comprising:
a flange body (100, 1302);
a flange bore (201, 202) formed in the flange body (100, 1302) and having a shape of two partially overlapping circles;
wherein the flange bore (201, 202) of the first flange (200) has an inner perimeter corresponding to an outer perimeter of the first end portion (600) of the accommodation chamber (400);
wherein the flange bore (201, 202) of the second flange (200) has an inner perimeter corresponding to an outer perimeter of the second end portion (601) of the accommodation chamber (400), **characterised in that**
one of the flange bodies (1302) comprises a filler hole (1602) adapted for filling material to be extruded through the filler hole (1602) into the accommodation chamber (400).

2. The screw housing (500) of claim 1,
wherein the accommodation chamber (400) comprises a double screw bore (403) having a shape of two partially overlapping circles, wherein the double screw bore (403) has an inner perimeter which is smaller than the outer perimeter of the accommodation chamber (400).

3. The screw housing (500) of claim 2,
wherein an inner surface of the accommodation chamber (400) delimiting the double screw bore (403) comprises a hardened material.

4. The screw housing (500) of any one of claims 1 to 3,
comprising a thermally conductive coating structure (800) surrounding an outer surface of the accommodation chamber (400).

5. The screw housing (500) of claim 4,
wherein the thermally conductive coating structure (800) comprises one of the group consisting of a ceramic, aluminium, aluminium nitride, a cement bound aluminium, and magnesium.

6. The screw housing (500) of claim 4 or 5,
wherein the thermally conductive coating structure (800) has an external shape of a cylinder or an ellipse, and has an internal shape of two partially overlapping circles.

7. The screw housing (500) of any one of claims 4 to 6,
comprising a heating band (901) wrapped around the thermally conductive coating structure (800).

8. The screw housing (500) of any one of claims 4 to 7,
comprising a cooling band (1000) wrapped around the thermally conductive coating structure (800).

9. The screw housing (500) of any one of claims 4 to 8,
comprising a reinforcement sheath (700) providing an outer circumference of a section between the first end portion (600) and the second end portion (601).

10. The screw housing (500) of any one of claims 1 to 9,
wherein the accommodation chamber (400) is tight fit directly at or into the first flange (200) and the second flange (200) without a separate adapter between the accommodation chamber (400) and the first flange (200) and the second flange (200).

11. The screw housing (500) of any one of claims 2 to 10,
wherein the two partially overlapping circles have a constant diameter along an axial extension of the accommodation chamber (400).

12. The screw housing (500) of any one of claims 2 to 10,
wherein two partially overlapping circles have a conically tapering diameter along an axial extension of the accommodation chamber (400).

13. The screw housing (500) of any one of claims 1 to 12,
wherein the flange body (100, 1302) comprises fastening bores (204) for fastening a tool, particularly a drive unit for driving extruder screws or a shaping tool for shaping molten material to be extruded, at the flange (200).

14. The screw housing (1500) of any one of claims 1 to 13,
wherein the flange body (100, 1302) comprises
a section (1302) of circular cylindrical shape or of elliptical cylindrical shape;
a connection plate (1301) connected to the section (1302).

15. The screw housing of any one of claims 1 to 13,
wherein the flange body (100, 1302) comprises
two cut pipes which are cut along a secant-shaped cutting plane and which are connected to one another,
a connection plate connected to the two cut pipes.

16. A double screw extruder, the double screw extruder comprising
a screw housing (500) of any one of claims 1 to 15;
two extruder screws accommodated in the accommodation chamber (400) of the screw housing (500);
a drive unit mounted on the first flange (200) and adapted for driving the two extruder screws;
a shaping tool mounted on the second flange (200) and adapted for shaping molten material to be extruded.

17. The double screw extruder of claim 16,
adapted for processing polyvinyl chloride.

18. A method of manufacturing a screw housing (500) for a double screw extruder, the method comprising
forming an accommodation chamber (400) for two extruder screws which has a first end portion (600) and a second end portion (601);
forming a first flange (200) and a second flange (200), each of the first flange (200) and the second flange (200) being formed to comprise:
a flange body (100, 1302);
a flange bore (201, 202) formed in the flange body (100) and having a shape of two partially overlapping circles;
connecting the flange bore (201, 202) of the first flange (200), having an inner perimeter corresponding to an outer perimeter of the first end portion (600) of the accommodation chamber (400), to the first end portion (600) of the accommodation chamber (400);
connecting the flange bore (201, 202) of the second flange (200), having an inner perimeter corresponding to an outer perimeter of the second end portion (601) of the accommodation chamber (400), to the second end portion (601) of the accommodation chamber (400), **characterised by**
forming a filler hole (1602) adapted for filling material to be extruded through the filler hole (1602) into the accommodation chamber (400) in one of the flange bodies (1302).

19. The method of claim 18,
wherein the accommodation chamber (400) is formed by cutting two tubular pipes (300, 301) along a secant-shaped cutting plane and by connecting the two cut pipes (300, 301) at a cutting edge.

20. The method of claim 19,
wherein the two cut pipes (300, 301) are connected by welding, particularly by electron beam welding.

21. The method of claim 19 or 20,
comprising hardening an inner surface of the two tubular pipes (300, 301) by introducing hardening material into the two tubular pipes (300, 301) at a temperature below a melting temperature of a material of the two tubular pipes (300, 301) and above a melting temperature of the hardening material.

22. The method of any one of claims 18 to 21,
wherein the flange bores (201, 202) are connected to the end portions (600, 601) of the accommodation chamber (400) by sliding the flange bores (201, 202) over the end portions (600, 601) and by fixing the flange bores (201, 202) at the end portions (600, 601) by welding.

23. The method of any one of claims 19 to 22,
comprising forming an auxiliary skin (700) around and spaced with regard to an outer surface of the accommodation chamber (400);
casting a thermally conductive coating structure (800) in a space between the auxiliary skin (700) and the accommodation chamber (400);
subsequently removing the auxiliary skin (700).

24. The method of any one of claims 19 to 22,
screwing a thermally conductive coating structure (800) onto the accommodation chamber (400).

## Patentansprüche

**1.** Schneckengehäuse (500) für einen Doppelschneckenextruder, wobei das Schneckengehäuse (500) aufweist:
eine Aufnahmekammer (400) für zwei Extruderschnecken, die einen ersten Endabschnitt (600) und einen zweiten Endabschnitt (601) aufweist;
einen ersten Flansch (200) und einen zweiten Flansch (200), wobei jeder von dem ersten Flansch (200) und dem zweiten Flansch (200) aufweist:
einen Flanschkörper (100, 1302);
eine Flanschbohrung (201, 202), die in dem Flanschkörper (100, 1302) gebildet ist und eine Form von zwei sich teilweise überlappenden Kreisen aufweist;
wobei die Flanschbohrung (201, 202) des ersten Flansches (200) einen inneren Durchmesser aufweist, der einem äußeren Durchmesser des ersten Endabschnitts (600) der Aufnahmekammer (400) entspricht;
wobei die Flanschbohrung (201, 202) des zweiten Flansches (200) einen inneren Durchmesser aufweist, der einem äußeren Durchmesser des zweiten Endabschnitts (601) der Aufnahmekammer (400) entspricht,
**dadurch gekennzeichnet, dass** einer der Flanschkörper (1302) eine Einfüllöffnung (1602) aufweist, die geeignet ist, zu extrudierendes Material durch die Einfüllöffnung (1602) in die Aufnahmekammer (400) zu füllen.

**2.** Schneckengehäuse (500) gemäß Anspruch 1,
wobei die Aufnahmekammer (400) eine Doppelschneckenbohrung (403) aufweist, die eine Form von zwei sich teilweise überlappenden Kreisen aufweist, wobei die Doppelschneckenbohrung (403) einen inneren Durchmesser aufweist, der kleiner als der äußere Durchmesser der Aufnahmekammer (400) ist.

**3.** Schneckengehäuse (500) gemäß Anspruch 2,
wobei eine innere Oberfläche der Aufnahmekammer (400), die die Doppelschneckenbohrung (403) begrenzt, ein gehärtetes Material aufweist.

**4.** Schneckengehäuse (500) gemäß einem der Ansprüche 1 bis 3,
aufweisend eine thermisch leitende Beschichtungsstruktur (800), die eine äußere Oberfläche der Aufnahmekammer (400) umgibt.

**5.** Schneckengehäuse (500) gemäß Anspruch 4,
wobei die thermisch leitende Beschichtungsstruktur (800) eines der Gruppe bestehend aus einer Keramik, Aluminium, Aluminiumnitrid, einem zementgebundenem Aluminium und Magnesium aufweist.

**6.** Schneckengehäuse (500) gemäß Anspruch 4 oder 5,
wobei die thermisch leitende Beschichtungsstruktur (800) eine äußere Form eines Zylinders oder einer Ellipse aufweist, und eine innere Form von zwei sich teilweise überlappenden Kreisen aufweist.

**7.** Schneckengehäuse (500) gemäß einem der Ansprüche 4 bis 6,
aufweisend ein Heizband (901), das um die thermisch leitende Beschichtungsstruktur (800) gewickelt ist.

**9.** Schneckengehäuse (500) gemäß einem der Ansprüche 4 bis 8,
aufweisend einen Verstärkungsmantel (700), der einen äußeren Umfang eines Bereichs zwischen dem ersten Endabschnitt (600) und dem zweiten Endabschnitt (601) bereitstellt.

**10.** Schneckengehäuse (500) gemäß einem der Ansprüche 1 bis 9,
wobei die Aufnahmekammer (400) pressgepasst direkt an oder in den ersten Flansch (200) und den zweiten Flansch (200) ohne einen getrennten Adapter zwischen der Aufnahmekammer (400) und dem ersten Flansch (200) und dem zweiten Flansch (200) ist.

**11.** Schneckengehäuse (500) gemäß einem der Ansprüche 2 bis 10,
wobei die zwei sich teilweise überlappenden Kreise einen konstanten Durchmesser entlang einer axialen Verlängerung der Aufnahmekammer (400) aufweisen.

**12.** Schneckengehäuse (500) gemäß einem der Ansprüche 2 bis 10,
wobei zwei sich teilweise überlappende Kreise einen sich konisch verjüngenden Durchmesser entlang einer axialen Verlängerung der Aufnahmekammer (400) aufweisen.

**13.** Schneckengehäuse (500) gemäß einem der Ansprüche 1 bis 12,
wobei der Flanschkörper (100, 1302) Befestigungsbohrungen (204) zum Befestigen eines Geräts, insbesondere einer Antriebsvorrichtung zum Antreiben von Extruderschnecken oder einem Formwerkzeug zum Formen von zu extrudierendem geschmolzenen Material, an dem Flansch (200) aufweist.

**14.** Schneckengehäuse (500) gemäß einem der Ansprüche 1 bis 13,
wobei der Flanschkörper (100, 1302)
einen Bereich (1302) von kreiszylindrischer Form oder von elliptisch-zylindrischer Form;
eine Verbindungsplatte (1301), die mit dem Bereich (1302) verbunden ist, aufweist.

**15.** Schneckengehäuse (500) gemäß einem der Ansprüche 1 bis 13,
wobei der Flanschkörper (100, 1302)
zwei geschnittene Leitungen, die entlang einer sekantenförmigen Schnittebene geschnitten sind und wie miteinander verbunden sind,
eine Verbindungsplatte, die die zwei geschnittenen Leitungen verbindet, aufweist.

**16.** Doppelschneckenextruder, wobei der Doppelschneckenextruder aufweist
ein Schneckengehäuse (500) gemäß einem der Ansprüche 1 bis 15;
zwei Extruderschnecken, die in der Aufnahmekammer (400) des Schneckengehäuses (500) untergebracht sind;
eine Antriebsvorrichtung, die an dem ersten Flansch (200) befestigt ist und geeignet ist, die zwei Extruderschnecken anzutreiben;
ein Formwerkzeug, das an dem zweiten Flansch (200) befestigt ist und geeignet ist, zu extrudierendes geschmolzenes Material zu formen.

**17.** Doppelschneckenextruder gemäß Anspruch 16,
geeignet zum Verarbeiten von Polyvinylchlorid.

**18.** Verfahren zum Herstellen eines Schneckengehäuses (500) für einen Doppelschneckenextruder, wobei das Verfahren aufweist:
Bilden einer Aufnahmekammer (400) für zwei Extruderschnecken, die einen ersten Endabschnitt (600) und einen zweiten Endabschnitt (601) aufweist;
Bilden eines ersten Flanschs (200) und eines zweiten Flanschs (200), wobei jeder von dem sich bildenden ersten Flansch (200) und dem sich bildenden zweiten Flansch (200) aufweist:
einen Flanschkörper (100, 1302);
eine Flanschbohrung (201, 202), die in dem Flanschkörper (100, 1302) gebildet ist und eine Form von zwei sich teilweise überlappenden Kreisen aufweist;
Verbinden der Flanschbohrung (201, 202) des ersten Flansches, die einen inneren Durchmesser aufweist, der einem äußeren Durchmesser des ersten Endabschnitts (600) der Aufnahmekammer (400) entspricht, mit dem ersten Endabschnitt (600) der Aufnahmekammer (400);
Verbinden der Flanschbohrung (201, 202) des zweiten Flansches (200), die einen inneren Durchmesser aufweist, der einem äußeren Durchmesser des zweiten Endabschnitts (601) der Aufnahmekammer (400) entspricht, mit dem zweiten Endabschnitt (601) der Aufnahmekammer (400),
**gekennzeichnet durch**
Bilden einer Einfüllöffnung (1602), die geeignet ist, zu extrudierendes Material **durch** die Einfüllöffnung (1602) in die Aufnahmekammer (400) in einem der Flanschkörper (1302) zu füllen.

**19.** Verfahren gemäß Anspruch 18,
wobei die Aufnahmekammer (400) durch Schneiden von zwei Rohrleitungen (300, 301) entlang einer sekantenförmigen Schnittebene und Verbinden der zwei geschnittenen Leitungen (300, 301) an einer Schneidkante.

**20.** Verfahren gemäß Anspruch 19,
wobei die zwei geschnittenen Leitungen (300, 301) durch Schweißen, insbesondere durch Elektronenstrahlschweißen, verbunden sind.

**21.** Verfahren gemäß Anspruch 19 oder 20,
aufweisend Härten einer inneren Oberfläche der zwei Rohrleitungen (300, 301), indem Härtungsmaterial in die zwei Rohrleitungen (300, 301) bei einer Temperatur unter einer Schmelztemperatur eines Materials der zwei Rohrleitungen (300, 301) und über einer Schmelztemperatur des Härtungsmaterials eingeführt wird.

**22.** Verfahren gemäß einem der Ansprüche 18 bis 21,
wobei die Flanschbohrungen (201, 202) mit den Endabschnitten (600, 601) der Aufnahmekammer (400) verbunden sind, indem die Flanschbohrungen (201, 202) über die Endabschnitte (600, 601) geschoben werden und die Flanschbohrungen (201, 202) an den Endabschnitten (600, 601) durch Schweißen fixiert werden.

**23.** Verfahren gemäß einem der Ansprüche 19 bis 22,
aufweisend Bilden einer Hilfshaut (700) um und beabstandet in Bezug auf eine äußere Oberfläche der Aufnahmekammer (400);
Gießen einer thermisch leitenden Beschichtungsstruktur (800) in einen Raum zwischen der Hilfshaut (700) und der Aufnahmekammer (400);
anschließend Entfernen der Hilfshaut (700).

**24.** Verfahren gemäß einem der Ansprüche 19 bis 22,
Schrauben einer thermisch leitenden Beschichtungsstruktur (800) auf die Aufnahmekammer (400).

## Revendications

1. Logement de vis (500) pour une extrudeuse à double vis, le logement de vis (500) comprenant :
une chambre de logement (400) pour deux vis d'extrudeuse qui comporte une première partie d'extrémité (600) et une seconde partie d'extrémité (601) ;
une première bride (200) et une seconde bride (200), chacune de la première bride (200) et la seconde bride (200) comprenant :
- un corps de bride (100, 1302) ;
- un alésage de bride (201, 202) formé dans le corps de bride (100, 1302) et possédant une forme de deux cercles se chevauchant partiellement ;
dans lequel l'alésage de bride (201, 202) de la première bride (200) comporte un périmètre intérieur correspondant à un périmètre extérieur de la première partie d'extrémité (600) de la chambre de logement (400) ;
dans lequel l'alésage de bride (201, 202) de la seconde bride (200) comporte un périmètre intérieur correspondant à un périmètre extérieur de la seconde partie d'extrémité (601) de la chambre de logement (400), **caractérisé en ce que**
un des corps de bride (1302) comprend un orifice de remplissage (1602) adapté pour un matériau de remplissage destiné à être extrudé à travers l'orifice de remplissage (1602) dans la chambre de logement (400).

2. Logement de vis (500) selon la revendication 1, dans lequel la chambre de logement (400) comprend un alésage à double vis (403) possédant une forme de deux cercles se chevauchant partiellement, dans lequel l'alésage à double vis (403) comporte un périmètre intérieur qui est inférieur au périmètre extérieur de la chambre de logement (400).

3. Logement de vis (500) selon la revendication 2, dans lequel une surface intérieure de la chambre de logement (400) délimitant l'alésage à double vis (403) comprend un matériau durci.

4. Logement de vis (500) selon une quelconque des revendications 1 à 3, comprenant une structure de revêtement thermiquement conductrice (800) entourant une surface extérieure de la chambre de logement (400).

5. Logement de vis (500) selon la revendication 4, dans lequel la structure de revêtement thermiquement conductrice (800) comprend un élément parmi le groupe constitué d'une céramique, d'aluminium, de nitrure d'aluminium, d'un aluminium lié avec ciment, et de magnésium.

6. Logement de vis (500) selon la revendication 4 ou 5, dans lequel la structure de revêtement thermiquement conductrice (800) présente une forme externe d'un cylindre ou d'une ellipse, et présente une forme interne de deux cercles se chevauchant partiellement.

7. Logement de vis (500) selon une quelconque des revendications 4 à 6, comprenant une bande de chauffage (901) enveloppée autour de la structure de revêtement thermiquement conductrice (800).

8. Logement de vis (500) selon une quelconque des revendications 4 à 7, comprenant une bande de refroidissement (1000) enveloppée autour de la structure de revêtement thermiquement conductrice (800).

9. Logement de vis (500) selon une quelconque des revendications 4 à 8, comprenant une gaine de renfort (700) fournissant une circonférence extérieure d'une section entre la première partie d'extrémité (600) et la seconde partie d'extrémité (601).

10. Logement de vis (500) selon une quelconque des revendications 1 à 9, dans lequel la chambre de logement (400) est ajustée de façon serrée directement au niveau de ou dans la première bride (200) et la seconde bride (200) sans adaptateur séparé entre la chambre de logement (400) et la première bride (200) et la seconde bride (200).

11. Logement de vis (500) selon une quelconque des revendications 2 à 10, dans lequel les deux cercles se chevauchant partiellement possèdent un diamètre constant le long d'un prolongement axial de la chambre de logement (400).

12. Logement de vis (500) selon une quelconque des revendications 2 à 10, dans lequel deux cercles se chevauchant partiellement possèdent un diamètre tronconique le long d'un prolongement axial de la chambre de logement (400).

13. Logement de vis (500) selon une quelconque des revendications 1 à 12, dans lequel le corps de bride (100, 1302) comprend des alésages de fixation (204) pour fixer un outil, particulièrement une unité d'entraînement pour entraîner des vis d'extrudeuse ou un outil de façonnage pour façonner un matériau fondu destiné à être extrudé, au niveau de la bride (200).

14. Logement de vis (1500) selon une quelconque des revendications 1 à 13, dans lequel le corps de bride (100, 1302) comprend :
une section (1302) de forme cylindrique circulaire ou de forme cylindrique elliptique ;
une plaque de liaison (1301) reliée à la section (1302).

15. Logement de vis selon une quelconque des revendications 1 à 13, dans lequel le corps de bride (100, 1302) comprend :
deux tuyaux coupés qui sont coupés le long d'un plan de coupe de forme sécante et qui sont raccordés l'un à l'autre,
une plaque de liaison reliée aux deux tuyaux coupés.

16. Extrudeuse à double vis, l'extrudeuse à double vis comprenant:
un logement de vis (500) selon une quelconque des revendications 1 à 15 ;
deux vis d'extrudeuse logées dans la chambre de logement (400) du logement de vis (500) ;
une unité d'entraînement montée sur la première bride (200) et adaptée pour entraîner les deux vis d'extrudeuse ;
un outil de façonnage monté sur la seconde bride (200) et adapté pour façonner un matériau fondu destiné à être extrudé.

17. Extrudeuse à double vis selon la revendication 16, adaptée pour traiter du chlorure de polyvinyle.

18. Procédé de fabrication d'un logement de vis (500) pour une extrudeuse à double vis, le procédé comprenant les étapes consistant à :
former une chambre de logement (400) pour deux vis d'extrudeuse qui comporte une première partie d'extrémité (600) et une seconde partie d'extrémité (601) ;
former une première bride (200) et une seconde bride (200), chacune de la première bride (200) et la seconde bride (200) étant formée pour comprendre :
- un corps de bride (100, 1302) ;
- un alésage de bride (201, 202) formé dans le corps de bride (100) et possédant une forme de deux cercles se chevauchant partiellement ;
relier l'alésage de bride (201, 202) de la première bride (200), possédant un périmètre intérieur correspondant à un périmètre extérieur de la première partie d'extrémité (600) de la chambre de logement (400), à la première partie d'extrémité (600) de la chambre de logement (400) ;
relier l'alésage de bride (201, 202) de la seconde bride (200), possédant un périmètre intérieur correspondant à un périmètre extérieur de la seconde partie d'extrémité (601) de la chambre de logement (400), à la seconde partie d'extrémité (601) de la chambre de logement (400), **caractérisé par** l'étape consistant à
former un orifice de remplissage (1602) adapté pour un matériau de remplissage destiné à être extrudé à travers l'orifice de remplissage (1602) dans la chambre de logement (400) dans un des corps de bride (1302).

19. Procédé selon la revendication 18, dans lequel la chambre de logement (400) est formée en coupant deux tuyaux tubulaires (300, 301) le long d'un plan de coupe de forme sécante et en raccordant les deux tuyaux coupés (300, 301) au niveau d'un bord de coupe.

20. Procédé selon la revendication 19, dans lequel les deux tuyaux coupés (300, 301) sont raccordés par soudage, particulièrement par soudage par faisceau d'électrons.

21. Procédé selon la revendication 19 ou 20, comprenant l'étape consistant à faire durcir une surface intérieure des deux tuyaux tubulaires (300, 301) en introduisant un matériau durcisseur dans les deux tuyaux tubulaires (300, 301) à une température inférieure à une température de fusion d'un matériau des deux tuyaux tubulaires (300, 301) et supérieure à une température de fusion du matériau durcisseur.

22. Procédé selon une quelconque des revendications 18 à 21, dans lequel les alésages de bride (201, 202) sont reliés aux parties d'extrémité (600, 601) de la chambre de logement (400) en faisant coulisser les alésages de bride (201, 202) par-dessus les parties d'extrémité (600, 601) et en fixant les alésages de bride (201, 202) au niveau des parties d'extrémité (600, 601) par soudage.

23. Procédé selon une quelconque des revendications 19 à 22, comprenant les étapes consistant à :
former une enveloppe auxiliaire (700) autour d'une surface extérieure, et espacée par rapport à celle-ci, de la chambre de logement (400) ;
couler une structure de revêtement thermiquement conductrice (800) dans un espace entre l'enveloppe auxiliaire (700) et la chambre de logement (400) ;
puis retirer l'enveloppe auxiliaire (700).

24. Procédé selon une quelconque des revendications 19 à 22, comprenant l'étape consistant à visser une structure de revêtement thermiquement conductrice (800) sur la chambre de logement (400).
